# EUROPEAN PATENT SPECIFICATION

(11) **EP 4 403 412 B1**
(45) Date of publication and mention of the grant of the patent: **04.06.2025**
(21) Application number: 23152471.1
(22) Date of filing: 19.01.2023
(51) Int. Cl.: B60N 2/50

(54) **A SAFETY ARRANGEMENT FOR A HEIGHT-ADJUSTABLE SEAT STRUCTURE AND A VEHICLE SEAT IN A TRUCK, LORRY OR BUS USING SUCH SAFETY ARRANGEMENT**
SICHERHEITSANORDNUNG FÜR EINE HÖHENVERSTELLBARE SITZSTRUKTUR UND FAHRZEUGSITZ IN EINEM LASTKRAFTWAGEN, LASTKRAFTWAGEN ODER BUS MIT SOLCH EINER SICHERHEITSANORDNUNG
AGENCEMENT DE SÉCURITÉ POUR UNE STRUCTURE DE SIÈGE RÉGLABLE EN HAUTEUR ET SIÈGE DE VÉHICULE DANS UN CAMION, UN CAMION OU UN BUS UTILISANT UN TEL AGENCEMENT DE SÉCURITÉ

(43) Date of publication of application: 24.07.2024
(73) Proprietor: Autoliv Development AB, 447 83 Vårgårda (SE)
(72) Inventor: Andersson, Mikael, 447 83 Vårgårda (SE); Sandqvist, Mikael, 447 83 Vårgårda (SE)
(74) Representative: AWA Sweden AB

(56) References cited:
- DE-A1- 2 446 516
- SE-C2- 528 418

## Description

### Technical field

The present invention refers to a safety arrangement for a height-adjustable seat structure and to a vehicle seat in a truck, lorry or bus using such safety arrangement.

### Technical background

Seats for trucks, lorries and busses should be comfortable to provide an ergonomic and comfortable working environment for the driver/passenger. The seat should by way of example provide a wide range of settings and also provide a good suspension. One well known measure to allow a height adjustment of the vehicle seat is to provide its seat structure with a seat lifting arrangement using a scissors type mechanism. Such seat structure does as such have an inherent weakness with a tendency to deform and bend forward in the event of a frontal crash. One way to reduce and restrict the movement in the event of a frontal crash is to provide the seat with a belt and a belt retractor that restricts the forward motion of the seat structure. Such belt retractor may be of the same type that is used in traditional seat belts. The belt does however typically require a certain slack to allow the seated person to adjust the seat in the vertical direction and in the rearward and forward directions. Such slack is however of danger in the event of a roll-over type accident. In a roll-over type accident, the seat structure and also the body of the seated person that is coupled to the seat, will be subjected to an upward and lateral movement. While the movement of the seat structure can be restricted by the belt and belt retractor, the movement of the body can be restricted by seatbelt and also by one or more airbags that are configured to be deployed in the opposite directions. However, there is still a risk that especially the head of the seated person comes in contact with the crossbeam of the vehicle cab that extends between the A-pillar and the B-pillar. This is since the body is not fully coupled in that direction by the seatbelt. This is especially the case in the event the seat has been set to a vertically raised position with a shorter vertical distance between the person's head and the crossbeam of the vehicle cab. There is hence a need to provide an improved safety arrangement for a seat that is intended to be used in a truck, lorry or bus, which arrangement is directed to operate in the event of a roll-over type accident. Document SE528418C2 discloses a safety arrangement for a height-adjustable seat structure.

### Summary

It is an object of the present invention to provide a safety arrangement for a height-adjustable seat structure that is designed to overrule any adjustment in the height direction set by the driver/passenger.

A further object is to provide a safety arrangement that may be released in the event of a determination of a roll-over type accident.

Yet another object is to provide a safety arrangement that is specifically designed for a seat structure in a vehicle seat in a truck, lorry or bus and similar vehicles that uses a scissors-type mechanism.

These and other objects that will be apparent from the following summary and description are achieved by a safety arrangement according to the appended claims.

According to an aspect of the present invention, there is provided a safety arrangement for a height-adjustable seat structure, the seat structure comprising: a first set of legs comprising a first leg pivotably connected to a second leg, and a first pair of guide rails comprising an upper guide rail and a lower guide rail; wherein
the first leg in the first set of legs comprises one end portion being pivotably hinged to the upper guide rail in the first pair of guide rails and the other end portion being linearly movable along the lower guide rail in the first pair of guide rails, and the second leg in the first set of legs comprises one end portion pivotably hinged to the lower guide rail in the first pair of guide rails and the other end portion being linearly movable along the upper guide rail in the first pair of guide rails; wherein
the height-adjustable seat structure further comprises a stop member and a seat actuator comprising a piston, said seat actuator being configured to, upon an activation signal, move the piston from a retracted position to an extended position in which a free end of the piston is configured to exert a force to an impact surface of the stop member, whereby the piston forces the height-adjustable seat structure towards a lowered position; and wherein
said piston forms an impact angle of 25-65 degrees as seen between the piston and a horizontal plane.

Accordingly, a safety arrangement is provided that is arranged to interact with a seat structure of the type that uses a scissors-type mechanism to allow the seat structure to be adjustable in height. Such seat structures are as such well known in seats for vehicles such as trucks, lorries and busses. More precisely, the safety arrangement according to the invention comprises a seat actuator with a piston which, when set to its extended position exerts an impact force to an impact surface of a stop member. The activation signal may be communicated from a crash sensor in response to a determined roll-over type accident. The activation signal may be communicated to the seat actuator via a processor which forms part of an Electronic Control Unit (ECU) of the vehicle.

The stop member serves as an anvil. As the piston hits the impact surface, the impact force applied by the piston causes a downwardly directed acceleration of the load that is supported by the seat structure, i.e., the body of the seated person. Due to the scissors-type mechanism, the acceleration will cause the two linearly movable end portions of the first set of legs to be moved along their respective guide rails, whereby the height-adjustable seat structure is forced towards a lowered position. The body of a person who is seated and coupled to a vehicle seat that is supported by the seat structure will automatically follow in the downward direction. Since the person's body is moved downwardly, her head portion will be prevented from hitting the crossbeam of the vehicle cab that extends between the A-pillar and the B-pillar. Instead, the lateral movement of her head (referred to in the filed as Y-direction) may be accommodated by an airbag that may be part of the vehicle's overall crash protection system and which airbag is configured to be deployed in the downward and lateral direction.

As a result of the piston's impact angle, the free end of the piston will be allowed to be moved along a longitudinal extension of the stop member as the seat structure is lowered. The piston and stop member may be seen as a latch and a rack respectively, where the piston after hitting the impact surface is allowed to follow the longitudinal extension of the stop member by a sliding movement without lockingly engaging the same.

By the piston forming an impact angle of 25-65 degrees as seen between a longitudinal extension of the piston and a horizontal plane, the impact surface serves as a firm physical stop that prevents the free end of the piston from sliding laterally against/sliding off the impact surface, while at the same time causing a vertical force component to the seat structure that efficiently lowers the seat structure.

The seat structure may in one embodiment further comprise a second set of legs comprising a first leg pivotably connected to a second leg, and a second pair of guide rails comprising an upper and a lower guide rail; wherein the first leg in the second set of legs comprises one end portion being pivotably hinged to the upper guide rail in the second pair of guide rails and the other end portion being linearly movable along the lower guide rail in the second pair of guide rails, and the second leg in the second set of legs comprises one end portion pivotably hinged to the lower guide rail in the second pair of guide rails and the other end portion being linearly movable along the upper guide rail in the second pair of guide rails; and wherein the first and second sets of legs are interconnected by at least one crossbar, said at least one crossbar extending perpendicularly to the longitudinal extensions of the guide rails in the first and second pairs of guide rails.

Although the seat structure in its simplest form may comprise one set of legs only, a more robust seat structure may be provided for by providing two sets of legs. The first and second sets of legs of the seat structure are preferably arranged side by side in a parallel fashion. The first and second sets of legs are preferably identical.

The at least one cross bar may extend between the end portions of the legs in the two sets of legs. A cross bar may also extend between the respective centrally arranged pivots in the two sets of legs.

The stop member may comprise a plurality of parallel impact surfaces, each impact surface having a surface extension orthogonally to a longitudinal extension of the upper and lower guide rails of the first pair of guide rails.

The thus shaped stop member with a plurality of impact surfaces may be seen as a rack having a longitudinally extending undulated pattern with ridges and valleys, where one of two opposing wall portions that together form a ridge forms an impact surface.

The stop member comprises, according to one embodiment, a plurality of parallel impact surfaces that are evenly distributed along the longitudinal extension of the stop member, whereby the piston when moved to its extended position is allowed to abut an impact surface no matter if the height-adjustable seat structure is set to an upper most or lower most extreme height.

The stop member may comprise at least 3 impact surfaces, and more preferred at least 5 impact surfaces. In the event the height adjustable seat structure is provided with a number of fixed positions from which the user may chose, the number of impact surfaces may correspond to the number of fixed positions.

The piston may be configured to be actuated by a gas pressure generated by a gas generator. The gas generator may be a pyrotechnic gas generator.

The piston may be contained in a housing having a venting arrangement that allows the generated gas to be vented from the housing. Thereby the piston may be allowed to be retracted after activation to thereby facilitate the lowering of the seat structure.

The seat actuator may be dimensioned to apply an impact force to the linearly movable end portion of the leg that has a vertical force component that exceeds a vertical force component applied by any seat lifting arrangement integrated in the seat structure. A seat lifting arrangement is typically part of a comfort arrangement of a seat structure to allow the seated person to adjust the height and the suspension of the seat structure. Such seat lifting arrangement may by way of example be a gas spring that interacts with the one or two sets of legs of the seat structure. By dimensioning the vertical force component of the impact force applied by the seat actuator to exceed the vertical force component applied by any seat lifting arrangement, the latter will be overruled, and the seat structure will be forced to its lowered position.

The stop member may in one embodiment be fixedly mounted to a substantially horizontally arranged structure, said structure being fixed in view of the first pair of guide rails. The structure may by way of example be a plate fixed to the floor or to a foundation of the seat structure which foundation supports the lower guide rail(s).

The seat actuator may, in the event of a substantially horizontally arranged structure, be fixedly supported by a crossbar extending between the linearly movable end portions of the first and second sets of legs. The crossbar supporting the seat actuator is preferable a crossbar that extends between the lower linearly movable end portions of the first and second sets of legs. By such position, the length of the piston may be relatively short. In the event of only one set of legs, the seat actuator may instead be fixedly supported by a crossbar that extends from one of the moveable end portions of the first set of legs. Such crossbar is preferably arranged on the lower linearly movable end portion of the first set of legs.

The seat actuator may be fixedly supported midway along a full length of the crossbar that extends between the linearly movable end portions of the first and second sets of legs. In the event of only one set of legs, the seat actuator may instead be fixedly supported at a free end of a crossbar that extends from one of the moveable end portions of the first set of legs. By the midway position, the seat actuator will be arranged along a longitudinal centreline of the seat structure.

The stop member may in one embodiment be fixedly mounted to a substantially vertically arranged structure, said substantially vertically arranged structure being fixed in view of the first pair of guide rails. The structure may by way of example be fixed to a wall portion of the cab behind the seat structure. The structure may by way of example be bolted or welded to the wall portion of the cab behind the seat structure or to a bracket which in turn is bolted or welded to the wall portion of the cab behind the seat structure. In yet another embodiment, the structure may be fixedly mounted, directly or indirectly to the first or first and second pair of guide rails.

The seat structure may further comprise a seat support having a top surface and a bottom surface, and the upper guide rail in the respective pair of guide rails may be supported by the bottom surface of the seat support. The seat actuator may be fixedly supported by the bottom surface of the seat support.

The seat actuator may be fixedly mounted to a free end of a bracket which in turn is fixedly mounted to the bottom surface of the seat support. The bracket should have a length so that neither the bracket, nor the seat actuator comes in contact with the floor of the vehicle cab when the seat structure is set to its lower-most position.

The seat actuator may be fixedly supported by the bottom surface of the seat support along a longitudinal centreline of the seat support.

According to another aspect, the invention refers to a vehicle seat in a truck, lorry or bus characterized in that it is provided with a safety arrangement according to any of claims 1-12. The features and advantages of such safety arrangement have been discussed above. These are equally applicable to a vehicle seat using such safety arrangement, and to avoid undue repetition, reference is made to the sections above.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses one embodiment of a vehicle seat with a heigh-adjustable seat structure using a scissors-type mechanism.
Fig. 2 schematically discloses how the legs of the scissors-type mechanism are moved during a lowering of the seat structure.
Fig. 3 discloses a vehicle seat with a first embodiment of the safety arrangement according to the invention.
Figs. 4A-4C schematically disclose the operation of the safety arrangement according to the first embodiment of the invention.
Fig. 5 discloses a second embodiment of the invention as mounted to a vehicle seat.
Figs. 6A-6C schematically disclose the operation of the safety arrangement according to the second embodiment of the invention.

### Detailed description

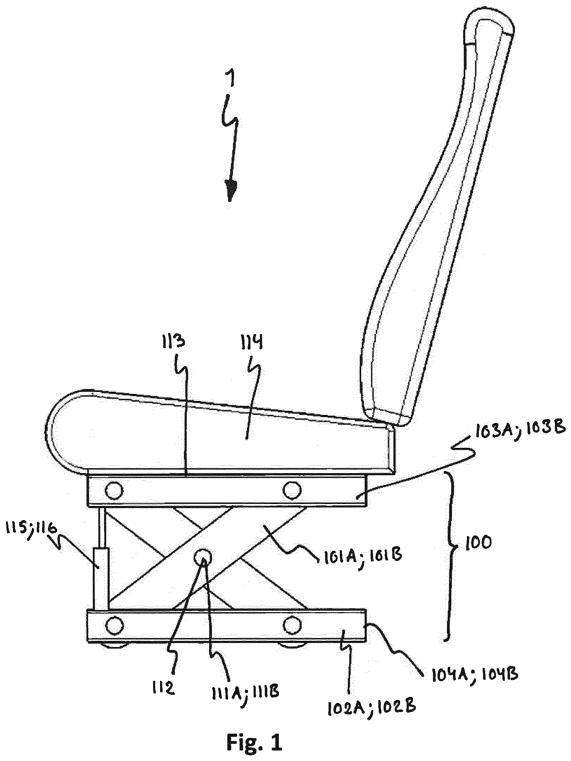

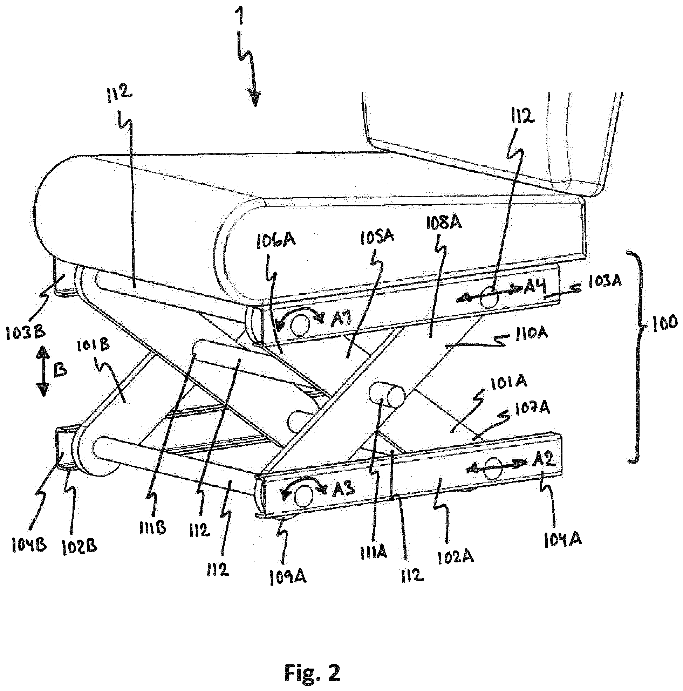

Now turning to Figs. 1 and 2, one example of a vehicle seat 1 is disclosed. The vehicle seat 1 is of the type that is typically used in a truck, lorry or bus. The vehicle seat 1 comprises a height-adjustable seat structure 100 using a scissors-type mechanism. The disclosed seat structure 100 comprises a first set of legs 101A and a second set of legs 101B that are pivotably interconnected by a crossbar 112. The two sets of legs are arranged in parallel, whereby only one set is disclosed in the disclosed view.

The crossbar 112 brings stability but also serves as a pivot 111A, 111B in view of the legs in each set of legs 101A, 101B. Although the seat structure 100 in its simplest form may comprise one set of legs only, a more robust seat structure may be provided for by providing two sets of legs. The first and second sets of legs 101A, 101B are preferably arranged side by side in a parallel fashion.

Further, the disclosed seat structure 100 comprises a first pair or guide rails 102A and a second pair or guide rails 102B. The two pairs of guide rails are arranged in parallel, whereby only one is disclosed in the disclosed view.

Each pair of guide rails 102A, 102B comprises an upper guide rail 103A, 103B and a lower guide rail 104A, 104B. The skilled person realizes that in the event of only one set of legs, only one pair of guide rails is required.

The two sets of legs 101A, 101B, and also the two pairs of guide rails 102A, 102B are preferably identical. Unless; specifically stated otherwise, only the first set of legs 101A and the first pair of guide rails 102A are discussed below with reference to Fig. 2.

Turning to Fig. 2. A first leg 105A in the first set of legs 101A comprises one end portion 106A that is pivotably hinged to the upper guide rail 103A in the first pair of guide rails 102A, see arrow A1. The other end portion 107A of the first leg 105A is linearly movable along the lower guide rail 104A in the first pair of guide rails 102A, see arrow A2.

Correspondingly, a second leg 108A in the first set of legs 101A comprises one end portion 109A that is pivotably hinged to the lower guide rail 104A in the first pair of guide rails 102A, see arrow A3. The other end portion 110A is linearly movable along the upper guide rail 103A in the first pair of guide rails 102A, see arrow A4. By this arrangement, the first set of legs 101A operates like a scissors-type mechanism that allows the height of the seat structure 100 to be adjustable, see arrow B, by each leg 105A, 108A pivoting in view or its respective guide rail 103A, 104A and also by the two legs 105A, 108A pivoting in view of each other around the pivot 111A.

The guide rails 103A, 104A may by way of example have a C-shaped or L-shaped cross section. It is to be realised that also other cross sections are applicable.

The lower guide rails 104A, 104B may be fixedly mounted directly to a floor (not disclosed) of the vehicle cab. They can also be fixed to a structure 203 to be discussed below which in turn is configured to be fixedly mounted to the floor of the cab.

The end portions 107A, 110A of the legs that are linearly movable along a respective guide rail 103A, 104A may be provided with an optional sliding member such as a wheel (not illustrated) that provides a low-frictional support relative to the guide rail. As an alternative to a wheel, a free end of the respective leg may be provided with a rounded end profile, a protective sheet or a protective plug. The sheet or plug may be formed by a low-friction material.

The first and second sets of legs 101A, 101B are interconnected by at least one crossbar 112. In the disclosed embodiment, five cross bars 112 are disclosed. The crossbars 112 extend perpendicularly to the longitudinal extensions of the guide rails 103A, 103B, 104A, 104B in the first and second pairs of guide rails 102A, 102B.

The seat structure 100 may further comprise, best seen in Fig. 1, a seat support 113. The seat support 113 has a top surface and a bottom surface. The top surface supports a seat cushion 114. The upper guide rails 103A, 103B in the respective pair of guide rails 102A, 102B is supported by the bottom surface of the seat support 113. The guide rails 103A, 103B may be mounted by e.g., bolting or welding to the seat support 113.

The seat structure 100 further comprises a seat lifting arrangement 115. The seat lifting arrangement 115 is disclosed highly schematically. The seat lifting arrangement 115, which as such is well known in the art, is typically part of a comfort arrangement of the seat structure 100 to allow the height and the suspension of the seat structure 100 to be adjusted. The seat lifting arrangement 115 may by way of example be a gas spring 116 that cooperates with the guide rails of the seat structure 100. The position and structural design of the seat lifting arrangement 115 may differ between different seat suppliers and vehicles.

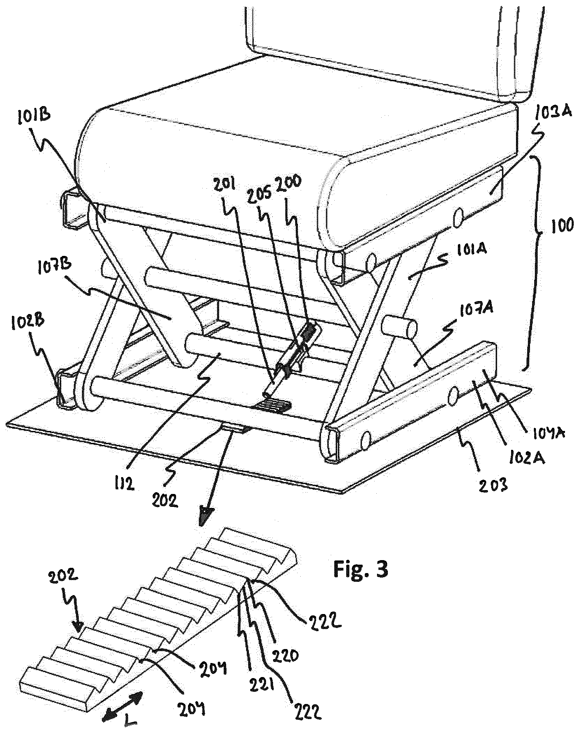

Now turning to Fig. 3, one embodiment of the present invention will be described as applied to a seat structure 100. The seat structure 100 is provided with a seat actuator 200 that serves as a safety arrangement to the height adjustable seat structure 100. The seat actuator 200 comprises a piston 201. The piston 201 is configured to interact with a stop member 202.

The stop member 202 is fixedly mounted to a substantially horizontally arranged structure 203. The structure 203 is fixed in view of the first pair of guide rails 102A and preferably also to the second pair of rails 102B. The structure 203 may by way of example be a plate fixed to the floor of the vehicle cab or to an optional foundation (not disclosed) of the seat structure 100 which foundation supports the lower guide rail(s).

The stop member 202 comprises a plurality of parallel impact surfaces 204. Each impact surface 204 has a surface extension orthogonally to a longitudinal extension of the upper and lower guide rails 103A, 104A of the first pair of guide rails 102A. The thus shaped stop member 202 with a plurality of impact surfaces 204 may be seen as a rack having a longitudinally extending undulated pattern with ridges 220 and valleys 221, where one of two opposing wall portions 222 of a ridge forms an impact surface 204.

The plurality of parallel impact surfaces 204 are evenly distributed along the longitudinal extension L of the stop member 202.

The stop member 202 may comprise at least 3 impact surfaces 204, and more preferred at least 5 impact surfaces 204. In the event the height adjustable seat structure 100 is provided with a number of fixed positions from which the user may chose, the number of impact surfaces 204 may correspond to the number of fixed positions.

The at least one impact surface 204 may have a straight surface extension as seen orthogonally to the longitudinal extension of the upper and lower guide rails 103A, 104A of the first pair of guide rails 102A.

The seat actuator 200 comprises a piston 201 that is contained in a housing 205 that forms a cylinder chamber. The cylinder chamber serves as a guide for the piston 201 during actuation thereof. The piston 201 is in its easiest form provided as a rod. The piston 201 may in some embodiments may be telescopic.

The seat actuator 200 is disclosed as being fixedly supported by the crossbar 112 that extends between the linearly movable end portions 107A, 107B of the first and second sets of legs 101A, 101B. The seat actuator 200 is mounted so that the piston 201 forms an impact angle α of 25-65 degrees as seen between the piston 201 and a horizontal plane.

The seat actuator 200 is disclosed as being fixedly supported midway along the full length of the crossbar 112 that extends between the linearly movable end portions 107A, 107BA of the first and second sets of legs 101A, 101B. By the midway position, the seat actuator 200 is arranged along a longitudinal centreline of the seat structure 100. Also, the seat actuator 200 is arranged aligned with and above the stop member 202.

The seat actuator 200 is, as will be further discussed below, configured to, upon an activation signal, move the piston 201 from a retracted position to an extended position in which a free end of the piston 201 exerts a force to one of the impact surfaces 204 of the stop member 202. The piston 201 thereby forces the height-adjustable seat structure 100 towards a lowered position. The activation signal may be communicated from a crash sensor (not illustrated) in response to a determined roll-over type accident. The activation signal may be communicated to the seat actuator via a processor (not illustrated) which forms part of an Electronic Control Unit (ECU) of the vehicle.

The piston 201 may be configured to be actuated by a gas pressure generated by a gas generator (not illustrated) in the seat actuator 200. The gas generator may be a pyrotechnic gas generator. This is well known in the art and is not further discussed.

The housing 205 of the seat actuator 200 may have a venting arrangement (not illustrated) that allows generated gas to be vented from the housing 205. Thereby the piston 201 may be allowed to be retracted after activation to thereby facilitate the lowering of the seat structure 100. This kind of venting is well known in the art and is not further discussed.

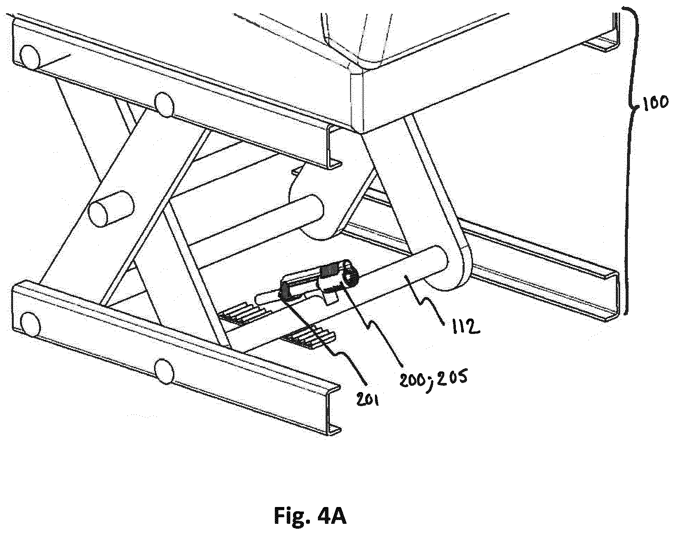

Now turning to Figs. 4A-4C, the operation of the safety arrangement according to the first embodiment will be discussed.

Starting with Fig. 4A, the seat actuator 200 is disclosed in its ordinary use with the seat actuator 200 fixedly supported to the cross bar 112 of the seat structure 100. Also, the piston 201 is in its retracted position.

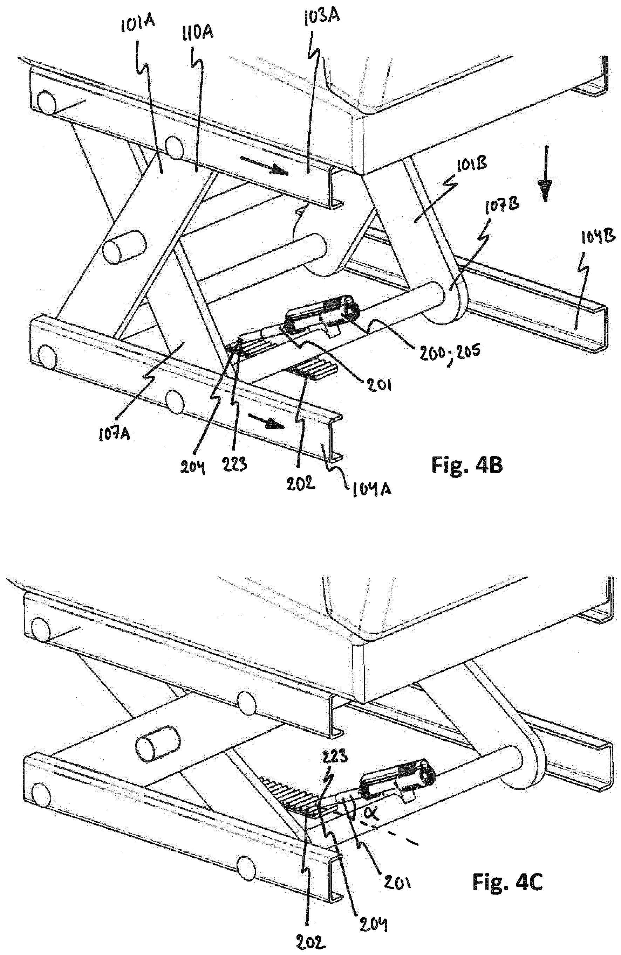

As a crash sensor in the vehicle determines a roll-over type accident, an activation signal is communicated from the crash sensor to the seat actuator 200 via a processor which forms part of an Electronic Control Unit (ECU) of the vehicle. The gas generator is activated, whereby α gas pressure is built up inside the housing 205 of the seat actuator 200. The gas pressure forces the piston 201 to move from its retracted position to its extended position, see Fig. 4B.

In its extended position, the free end 223 of the piston 201 contacts one of the impact surfaces 204 of the stop member 202. The stop member 202 serves as an anvil. As the piston 201 hits the impact surface 204, the impact force applied by the piston 201 causes a downwardly directed acceleration of the load that is supported by the seat structure 100, i.e. the body of a seated person. Due to the scissors-type mechanism of the seat structure 100, the acceleration will cause the linearly movable end portions 107A, 107B, 110A, 110B of the first and second sets of legs 101A, 101B to be moved along their respective guide rails 103A, 104A, 103B, 104B, see arrows, whereby the height-adjustable seat structure 100 is forced towards a lowered position, see Fig. 4C. The body of a person who is seated and coupled to a vehicle seat that is supported by the seat structure 100 will automatically follow in the downward direction.

Since the stop member 202 comprises a plurality of parallel impact surfaces 204 that are evenly distributed along the longitudinal extension of the stop member 202, the free end 223 piston 201 will when it is moved to its extended position, abut an impact surface 204 no matter if the height-adjustable seat structure 100 is set to an upper most or lower most extreme height.

Now turning to Fig. 4C. As a result of the piston's 201 impact angle α, the free end 223 of the piston 201 will be allowed to be moved along a longitudinal extension of the stop member 202 as the seat structure 100 is lowered. The piston 201 and stop member 202 may be seen as a latch and a rack respectively, where the piston 201 after hitting the impact surface 204 is allowed to follow the longitudinal extension of the stop member 202 by a sliding movement without lockingly engaging the same.

By the piston 201 forming an impact angle α of 25-65 degrees as seen between a longitudinal extension of the piston 201 and a horizontal plane, the impact surface 204 that is hit by the free end 223 of the piston 201 serves as a firm physical stop that prevents the free end 223 of the piston 201 from sliding laterally against/sliding off the impact surface 204, while at the same time causing a vertical force component to the seat structure 100 that efficiently lowers the same.

The seat actuator 200 is dimensioned to apply an impact force to the linearly movable end portions 107A, 107B, 110A, 110B of the legs that have a vertical force component that exceeds a vertical force component applied by any seat lifting arrangement integrated in the seat structure 100. The set lifting arrangement is omitted in Figs 3-4A-4C. A seat lifting arrangement is typically part of a comfort arrangement of a seat structure 100 to allow the seated person to adjust the height and the suspension of the seat structure 100. Such seat lifting arrangement may by way of example be a gas spring that interacts with the one or two sets of legs of the seat structure 100. By dimensioning the vertical force component of the impact force applied by the seat actuator 200 to exceed the vertical force component applied by any seat lifting arrangement, the latter will be overruled and the seat structure 100 will be forced to its lower most position and hence the position disclosed in Fig. 4C.

Now turning to Fig. ,5 a second embodiment of the safety arrangement is disclosed. The seat structure 100 and the vehicle seat 1 have the same overall design as that previously discussed with reference to Figs. 1 and 2. To avoid undue repetition, reference is made to the above description relating to Figs. 1 and 2.

The safety arrangement according to the second embodiment differs from the first embodiment in that the seat actuator 200 with the housing 205 and piston 201 is fixedly supported to a rear end of the seats structure 100 or vehicle seat 1. The seat actuator 200 is arranged along a longitudinal centreline of the seat structure 100. The seat actuator 200 is fixedly mounted to a free end of a bracket 206 which in turn is fixedly mounted to a bottom surface of the seat support 113. The bracket 206 has a length so that neither the bracket 206, nor the seat actuator 200 may come in contact with the floor of the vehicle cab when the seat structure 100 is set to its lower-most position.

The seat actuator 200 is mounted to the bracket 206 so that the piston 201 forms an impact angle α of 25-65 degrees as seen between the piston 201 and a horizontal plane.

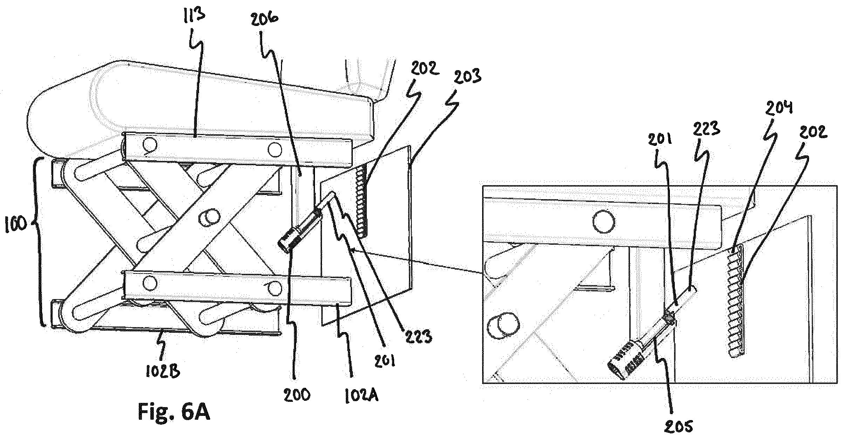

Now turning to Fig. 6A. The seat actuator 200 is configured to interact with a substantially vertically arranged stop member 202. The stop member 202 is fixedly mounted to a substantially vertically arranged structure 203. The substantially vertical structure 203 should be fixed in view of the first and second pair of guide rails 102A, 102B. The substantially vertically arranged structure 203 may by way of example be fixed to a wall portion of the vehicle cab behind the seat structure 100. The structure 203 may by way of example be bolted or welded to a wall portion of the vehicle cab behind the seat structure 100 or to any fixture which in turn is bolted or welded to a wall portion of the vehicle cab behind the seat structure 100. In yet another embodiment, the substantially vertical structure 203 may be fixedly mounted, directly or indirectly to the first or first and second pair of guide rails 102A, 102B.

The stop member 202 has the same design as that previously discussed with reference to Fig. 3 with the difference that it is substantially vertically arranged instead of substantially horizontally arranged.

The seat actuator 200 is configured to, upon an activation signal, move the piston 201 from a retracted position to an extended position in which a free end 223 of the piston 201 exerts a force to an impact surface 204 of the stop member 202. The piston 201 may thereby force the height-adjustable seat structure 100 towards a lowered position. The activation signal may be communicated from a crash sensor in response to a determined roll-over type accident. The activation signal may be communicated to the seat actuator 200 via a processor (not illustrated) which forms part of an Electronic Control Unit (ECU) of the vehicle. The use of an ECU and different sensors is well known to the skilled person in the art and is not further discussed.

The piston 201 may be configured to be actuated by a gas pressure generated by a gas generator. The gas generator may be a pyrotechnic gas generator. This is well known in the art and is not further discussed. The housing 205 of the seat actuator 200 may have a venting arrangement (not illustrated) that allows generated gas to be vented from the housing 205. Thereby the piston 201 may be allowed to be retracted after activation to thereby facilitate the lowering of the seat structure 100.

Now turning to Figs. 6A-6C, the operation of the safety arrangement according to the second embodiment will be discussed.

Starting with Fig. 6A, the seat actuator 200 is disclosed in its ordinary use with the seat actuator 200 fixedly supported via the bracket 206 in a position below the seat support 113. The piston 201 is disclosed as being set in its retracted position.

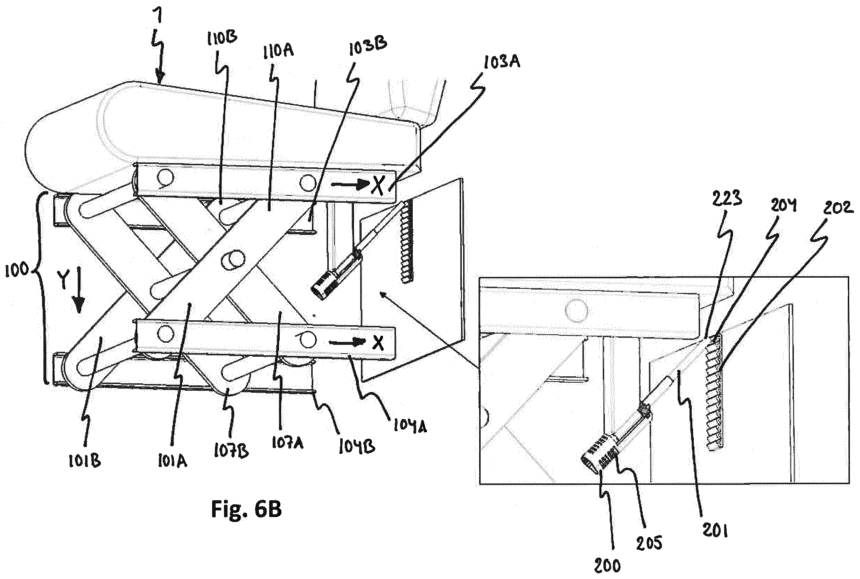

As the crash sensor (not illustrated) in the vehicle determines a roll-over type accident, an activation signal is communicated from the crash sensor to the seat actuator 200 via a processor which forms part of an Electronic Control Unit (ECU) of the vehicle. The gas generator is activated, whereby a gas pressure is built up inside the housing 205. The gas pressure forces the piston 201 to move from its retracted position to its extended position, see Fig. 6B.

In its extended position, the free end 223 of the piston 201 hits one of the impact surfaces 204 of the stop member 202. The stop member 202 serves as an anvil. As the piston 201 hits the impact surface 204, the impact force applied by the piston 201 causes a downwardly directed acceleration of the load that is supported by the seat structure 100, i.e. the body of the seated person. Due to the scissors-type mechanism, the acceleration will cause the linearly movable end portions 107A, 107B, 110A, 110B of the first and second sets of legs 101A, 101B to be moved along, see arrows X, their respective guide rails 103A, 104A, 103B, 104B, whereby the height-adjustable seat structure 1100 is forced towards a lowered position, see arrow Y. The body of a person who is seated and coupled to a vehicle seat 1 that is supported by the seat structure 100 will automatically follow in the downward direction.

Since the stop member 202 comprises a plurality of parallel impact surfaces 204 that are evenly distributed along the longitudinal extension of the stop member 202, the piston 201 will when it is moved to its extended position, abut an impact surface 204 no matter if the height-adjustable seat structure 100 is set to an upper most or lower most extreme height.

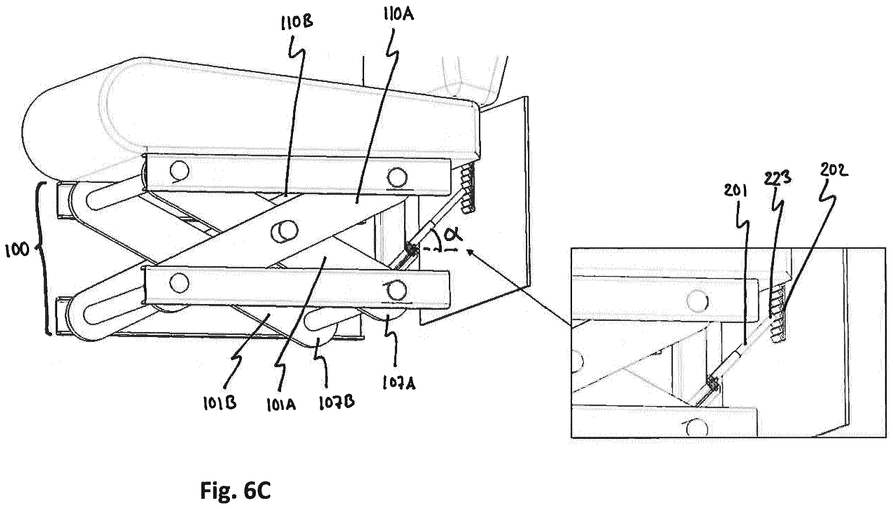

Now turning to Fig. 6C which discloses the seat structure 100 in its lowered position. As a result of the piston's 201 impact angle α, the free end 223 of the piston 201 will be allowed to be moved along a longitudinal extension of the stop member 202 as the seat structure 100 is lowered. The piston 201 and stop member 202 may be seen as a latch and a rack respectively, where the piston 201 after hitting the first impact surface 204 is allowed to follow the longitudinal extension of the stop member 202 by a sliding movement without lockingly engaging the same.

By the piston 201 forming an impact angle α of 25-65 degrees as seen between a longitudinal extension of the piston 201 and a horizontal plane, the impact surface 204 serves as a firm physical stop that prevents the free end 223of the piston 201 from sliding laterally against/sliding off the impact surface 204 , while at the same time causing a vertical force component to the seat structure 100 that efficiently lowers the same.

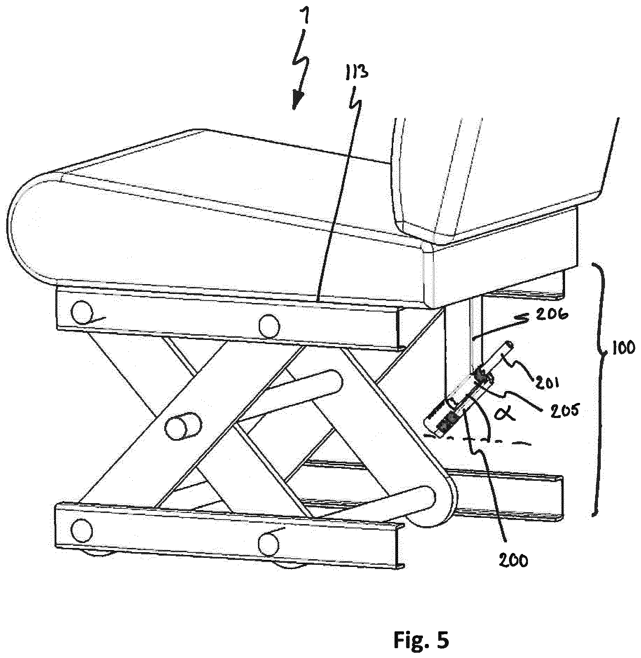

The seat actuator 200 is dimensioned to apply an impact force to the linearly movable end portions 107A, 107B, 110A, 110B of the legs that has a vertical force component that exceeds a vertical force component applied by any seat lifting arrangement (omitted in Figs. 5, 6A-6C) integrated in the seat structure 100. By dimensioning the vertical force component of the impact force applied by the seat actuator 200 to exceed the vertical force component applied by any seat lifting arrangement, the latter will be overruled and the seat structure 100 will be forced to its lower most position.

It is realized by a person skilled in the art that features from various embodiments disclosed herein may be combined with one another to provide further alternative embodiments.

Although the seat structure in its simplest form may comprise one set of legs only, a more robust seat structure may be provided for by providing two sets of legs. The first and second sets of legs of the seat structure are preferably arranged side by side in a parallel fashion. The first and second sets of legs are preferably identical.

The skilled person realizes that in the event of only one set of legs, the seat actuator forming part of the first embodiment may be fixedly supported by a crossbar that extends from one of the moveable end portions of the first set of legs. Such crossbar is preferably arranged on the lower linearly movable end portion of the first set of legs.

The seat structure has been disclosed with the seat structure and the seat actuator being oriented so that the linearly movable end portions of the legs are arranged to be moved in the rearward position to lower the seat structure. The skilled person realises that the seat structure and its seat actuator with remained function may be oriented in the opposite direction to instead be configured to be operated in the forward direction to lower the seat structure.

The safety arrangement may be combined with any additional separate restraint system (not illustrated). The systems may be configured to be activated simultaneously.

## Claims

1. A safety arrangement for a height-adjustable seat structure, the seat structure (100) comprising: a first set of legs (101A) comprising a first leg (105A) pivotably connected to a second leg (108A), and a first pair of guide rails (102A) comprising an upper guide rail (103A) and a lower guide rail (104A); wherein
the first leg (105A) in the first set of legs (101A) comprises one end portion (106A) being pivotably hinged to the upper guide rail (103A) in the first pair of guide rails (102A) and the other end portion (107A) being linearly movable along the lower guide rail (104A) in the first pair of guide rails (102A), and the second leg (108A) in the first set of legs (101A) comprises one end portion (109A) pivotably hinged to the lower guide rail (104A) in the first pair of guide rails (102A) and the other end portion (110A) being linearly movable along the upper guide rail (103A) in the first pair of guide rails (102A); wherein
the height-adjustable seat structure (100) further comprises a stop member (202) and a seat actuator (200) comprising a piston (201), said seat actuator (200) being configured, upon an activation signal, to move the piston (201) from a retracted position to an extended position in which a free end of the piston (201) is configured to exert a force to an impact surface (204) of the stop member (202), whereby the piston (201) forces the height-adjustable seat structure (100) towards a lowered position; and wherein
said piston (201) forms an impact angle α of 25-65 degrees as seen between the piston (201) and a horizontal plane.

2. The safety arrangement according to claim 1, wherein the seat structure (100) further comprises a second set of legs (101B) comprising a first leg (105B) pivotably connected to a second leg (108B), and a second pair of guide rails (102B) comprising an upper guide rail (103B) and a lower guide rail (104B); wherein
the first leg (105B) in the second set of legs (101B) comprises one end portion (106B) being pivotably hinged to the upper guide rail (103B) in the second pair of guide rails (102B) and the other end portion (107B) being linearly movable along the lower guide rail (104B) in the second pair of guide rails (102B), and the second leg (108B) in the second set of legs (101B) comprises one end portion (109B) pivotably hinged to the lower guide rail (104B) in the second pair of guide rails (102B) and the other end portion (110B) being linearly movable along the upper guide rail (103B) in the second pair of guide rails (102B); and wherein
the first and second sets of legs (101A, 101B) are interconnected by at least one crossbar (112), said at least one crossbar (112) extending perpendicularly to the longitudinal extensions of the guide rails (103A, 103B, 104A, 104B) in the first and second pair of guide rails (102A, 102B).

3. The safety arrangement according to claim 1 or 2, wherein the stop member (202) comprises a plurality of parallel impact surfaces (204), each impact surface (204) having a surface extension orthogonally to a longitudinal extension of the upper and lower guide rails (103A, 104A) of the first pair of guide rails (102A).

4. The safety arrangement according to any of the preceding claims,
wherein the stop member (202) comprises a plurality of parallel impact surfaces (204), and wherein the impact surfaces (204) are evenly distributed along a longitudinal extension of the stop member (202) so that the piston (201) when moved to its extended position is allowed to abut an impact surface (204) no matter if the height-adjustable seat structure (100) is set to an upper most or a lower most extreme height.

5. The safety arrangement according to any of the preceding claims,
wherein the stop member (202) comprises at least 3 impact surfaces (204), and more preferred at least 5 impact surfaces (204).

6. The safety arrangement according to any of the preceding claims,
wherein the piston (201) is configured to be actuated by a gas pressure generated by a gas generator.

7. The safety arrangement according to claim 1, wherein the seat actuator (200) is dimensioned to apply an impact force to the linearly movable end portions (107A, 107B, 110A, 110B) of the legs (105A, 105B, 108A, 108B) that has a vertical force component that exceeds a vertical force component applied by any seat lifting arrangement (115) integrated in the seat structure (100).

8. The safety arrangement according to any of the preceding claims,
wherein the stop member (202) is fixedly mounted to a substantially horizontally arranged structure (203), said structure being fixed in view of the first pair of guide rails (102A).

9. The safety arrangement according to any of the preceding claims,
wherein the seat actuator (200) is fixedly supported by a crossbar (112) extending between the linearly movable end portions (107A, 107B, 110A, 110B) of the first and second sets of legs (101A, 101B); or from one of the linearly moveable end portions (107A, 107B, 110A, 110B) of the first set of legs (101A).

10. The safety arrangement according to claim 9, wherein the seat actuator (200) is fixedly supported midway along a full length of the crossbar (112) extending between the linearly movable end portions of the first and second sets of legs (101A, 101B); or at a free end of a crossbar extending from one of the moveable end portions of the first set of legs.

11. The safety arrangement according to any of claims 1-7, wherein the stop member (202) is fixedly mounted to a substantially vertically arranged structure, said substantially vertically arranged structure being fixed in view of the first pair of guide rails (102A).

12. The safety arrangement according to claim 11, wherein the seat structure (100) further comprises a seat support (113) having a top surface and a bottom surface; wherein the upper guide rail (103A, 103B) in the respective pair of guide rails (102A, 102B) is supported by the bottom surface of the seat support (113), and wherein the seat actuator (200) is fixedly supported by the bottom surface of the seat support.

13. A vehicle seat in a truck, lorry or bus, **characterized in that** it is provided with a safety arrangement according to any of claims 1-12.

## Patentansprüche

1. Sicherheitsanordnung für eine höhenverstellbare Sitzstruktur, die Sitzstruktur (100) umfassend: einen ersten Satz von Schenkeln (101A), umfassend einen ersten Schenkel (105A), der mit einem zweiten Schenkel (108A) schwenkbar verbunden ist, und ein erstes Paar von Führungsschienen (102A), umfassend eine obere Führungsschiene (103A) und eine untere Führungsschiene (104A); wobei
der erste Schenkel (105A) in dem ersten Satz von Schenkeln (101A) einen Endabschnitt (106A), der an der oberen Führungsschiene (103A) in dem ersten Paar von Führungsschienen (102A) schwenkbar gelenkig angebracht ist, umfasst, und wobei der andere Endabschnitt (107A) entlang der unteren Führungsschiene (104A) in dem ersten Paar von Führungsschienen (102A) linear beweglich ist, und der zweite Schenkel (108A) in dem ersten Satz von Schenkeln (101A) einen Endabschnitt (109A), der an der unteren Führungsschiene (104A) in dem ersten Paar von Führungsschienen (102A) schwenkbar gelenkig angebracht ist, umfasst, und wobei der andere Endabschnitt (110A) entlang der oberen Führungsschiene (103A) in dem ersten Paar von Führungsschienen (102A) linear beweglich ist; wobei
die höhenverstellbare Sitzstruktur (100) ferner ein Anschlagelement (202) und einen Sitzaktuator (200) umfasst, umfassend einen Kolben (201), wobei der Sitzaktuator (200) konfiguriert ist, um bei einem Aktivierungssignal den Kolben (201) von einer eingefahrenen Position in eine ausgefahrene Position zu bewegen, in der ein freies Ende des Kolbens (201) konfiguriert ist, um eine Kraft auf eine Aufpralloberfläche (204) des Anschlagelements (202) auszuüben, wodurch der Kolben (201) die höhenverstellbare Sitzstruktur (100) zu einer abgesenkten Position hin drückt; und wobei
der Kolben (201) einen Aufprallwinkel α von 25-65 Grad ausbildet, wie gesehen zwischen dem Kolben (201) und einer horizontalen Ebene.

2. Sicherheitsanordnung nach Anspruch 1, wobei die Sitzstruktur (100) ferner einen zweiten Satz von Schenkeln (101B) umfasst, umfassend einen ersten Schenkel (105B), der mit einem zweiten Schenkel (108B) schwenkbar verbunden ist, und ein zweites Paar von Führungsschienen (102B), umfassend eine obere Führungsschiene (103B) und eine untere Führungsschiene (104B); wobei
der erste Schenkel (105B) in dem zweiten Satz von Schenkeln (101B) einen Endabschnitt (106B), der an der oberen Führungsschiene (103B) in dem zweiten Paar von Führungsschienen (102B) schwenkbar gelenkig angebracht ist, umfasst, und wobei der andere Endabschnitt (107B) entlang der unteren Führungsschiene (104B) in dem zweiten Paar von Führungsschienen (102B) linear beweglich ist, und der zweite Schenkel (108B) in dem zweiten Satz von Schenkeln (101B) einen Endabschnitt (109B), der an der unteren Führungsschiene (104B) in dem zweiten Paar von Führungsschienen (102B) schwenkbar gelenkig angebracht ist, umfasst, und der andere Endabschnitt (110B) entlang der oberen Führungsschiene (103B) in dem zweiten Paar von Führungsschienen (102B) linear beweglich ist; und wobei
der erste und der zweite Satz von Schenkeln (101A, 101B) durch mindestens einen Querträger (112) miteinander verbunden sind, wobei sich der mindestens eine Querträger (112) senkrecht zu den Längserstreckungen der Führungsschienen (103A, 103B, 104A, 104B) in dem ersten und dem zweiten Paar von Führungsschienen (102A, 102B) erstreckt.

3. Sicherheitsanordnung nach Anspruch 1 oder 2, wobei das Anschlagelement (202) eine Vielzahl von parallelen Aufpralloberflächen (204) umfasst, wobei jede Aufpralloberfläche (204) eine Oberflächenerstreckung aufweist, die orthogonal zu einer Längserstreckung der oberen und unteren Führungsschienen (103A, 104A) des ersten Paars von Führungsschienen (102A) ist.

4. Sicherheitsanordnung nach einem der vorstehenden Ansprüche, wobei das Anschlagelement (202) eine Vielzahl von parallelen Aufpralloberflächen (204) aufweist, und wobei die Aufpralloberflächen (204) gleichmäßig entlang einer Längserstreckung des Anschlagelements (202) verteilt sind, sodass der Kolben (201), wenn er in seine ausgefahrene Position bewegt wird, an einer Aufpralloberfläche (204) anliegen kann, unabhängig davon, ob die höhenverstellbare Sitzstruktur (100) auf eine oberste oder eine unterste äußerste Höhe eingestellt ist.

5. Sicherheitsanordnung nach einem der vorstehenden Ansprüche, wobei das Anschlagelement (202) mindestens 3 Aufpralloberflächen (204) und mehr bevorzugt mindestens 5 Aufpralloberflächen (204) umfasst.

6. Sicherheitsanordnung nach einem der vorstehenden Ansprüche, wobei der Kolben (201) konfiguriert ist, um durch einen Gasdruck, der durch einen Gasgenerator erzeugt wird, betätigt zu werden.

7. Sicherheitsanordnung nach Anspruch 1, wobei der Sitzaktuator (200) bemessen ist, um auf die linear beweglichen Endabschnitte (107A, 107B, 110A, 110B) der Schenkel (105A, 105B, 108A, 108B) eine Aufprallkraft auszuüben, die eine vertikale Kraftkomponente aufweist, die eine vertikale Kraftkomponente überschreitet, die durch eine beliebige Sitzhebeanordnung (115) ausgeübt wird, die in der Sitzstruktur (100) integriert ist.

8. Sicherheitsanordnung nach einem der vorstehenden Ansprüche, wobei das Anschlagelement (202) an einer im Wesentlichen horizontal angeordneten Struktur (203) fest montiert ist, wobei die Struktur in Sicht des ersten Paars von Führungsschienen (102A) befestigt ist.

9. Sicherheitsanordnung nach einem der vorstehenden Ansprüche, wobei der Sitzaktuator (200) durch einen Querträger (112), der sich zwischen den linear beweglichen Endabschnitten (107A, 107B, 110A, 110B) des ersten und des zweiten Satzes von Schenkeln (101A, 101B); oder von einem der linear beweglichen Endabschnitte (107A, 107B, 110A, 110B) des ersten Satzes von Schenkeln (101A) erstreckt, fest gestützt ist.

10. Sicherheitsanordnung nach Anspruch 9, wobei der Sitzaktuator (200) in der Mitte entlang der gesamten Länge des Querträgers (112), der sich zwischen den linear beweglichen Endabschnitten des ersten und des zweiten Satzes von Schenkeln (101A, 101B) erstreckt; oder an einem freien Ende eines Querträgers, der sich von einem der beweglichen Endabschnitte des ersten Satzes von Schenkeln erstreckt, fest gestützt ist.

11. Sicherheitsanordnung nach einem der Ansprüche 1 bis 7, wobei das Anschlagelement (202) an einer im Wesentlichen vertikal angeordneten Struktur fest montiert ist, wobei die im Wesentlichen vertikal angeordnete Struktur in Sicht des ersten Paars von Führungsschienen (102A) befestigt ist.

12. Sicherheitsanordnung nach Anspruch 11, wobei die Sitzstruktur (100) ferner eine Sitzstütze (113), die eine obere Oberfläche und eine untere Oberfläche aufweist, umfasst; wobei die obere Führungsschiene (103A, 103B) in dem jeweiligen Paar von Führungsschienen (102A, 102B) durch die untere Oberfläche der Sitztstütze (113) gestützt wird, und wobei der Sitzaktuator (200) durch die untere Oberfläche der Sitztstütze fest gestützt wird.

13. Fahrzeugsitz in einem Lastkraftwagen, Lastwagen oder Bus,
**dadurch gekennzeichnet, dass** er mit einer Sicherheitsanordnung nach einem der Ansprüche 1 bis 12 versehen ist.

## Revendications

1. Agencement de sécurité pour une structure de siège réglable en hauteur, la structure de siège (100) comprenant : un premier ensemble de pieds (101A) comprenant un premier pied (105A) relié de manière pivotante à un second pied (108A), et une première paire de rails de guidage (102A) comprenant un rail de guidage supérieur (103A) et un rail de guidage inférieur (104A) ; dans lequel
le premier pied (105A) du premier ensemble de pieds (101A) comprend une partie d'extrémité (106A) articulée de manière pivotante au rail de guidage supérieur (103A) de la première paire de rails de guidage (102A) et l'autre partie d'extrémité (107A) pouvant se déplacer linéairement le long du rail de guidage inférieur (104A) de la première paire de rails de guidage (102A), et le second pied (108A) du premier ensemble de pieds (101A) comprend une partie d'extrémité (109A) articulée de manière pivotante au rail de guidage inférieur (104A) de la première paire de rails de guidage (102A) et l'autre partie d'extrémité (110A) pouvant se déplacer linéairement le long du rail de guidage supérieur (103A) de la première paire de rails de guidage (102A) ; dans lequel
la structure de siège (100) réglable en hauteur comprend en outre un élément de butée (202) et un actionneur de siège (200) comprenant un piston (201), ledit actionneur de siège (200) étant conçu, sur la base d'un signal d'activation, pour déplacer le piston (201) d'une position escamotée à une position déployée dans laquelle une extrémité libre du piston (201) est conçue pour exercer une force sur une surface d'impact (204) de l'élément de butée (202), de telle manière que le piston (201) force la structure de siège (100) réglable en hauteur vers une position abaissée ; et dans lequel
ledit piston (201) forme un angle d'impact a de 25 à 65 degrés, vu entre le piston (201) et un plan horizontal.

2. Agencement de sécurité selon la revendication 1, dans lequel la structure du siège (100) comprend en outre un second ensemble de pieds (101B) comprenant un premier pied (105B) relié de manière pivotante à un second pied (108B), et une seconde paire de rails de guidage (102B) comprenant un rail de guidage supérieur (103B) et un rail de guidage inférieur (104B) ; dans lequel
le premier pied (105B) du second ensemble de pieds (101B) comprend une partie d'extrémité (106B) articulée de manière pivotante au rail de guidage supérieur (103B) de la seconde paire de rails de guidage (102B) et l'autre partie d'extrémité (107B) pouvant se déplacer linéairement le long du rail de guidage inférieur (104B) de la seconde paire de rails de guidage (102B), et le second pied (108B) du second ensemble de pieds (101B) comprend une partie d'extrémité (109B) articulée de manière pivotante au rail de guidage inférieur (104B) de la seconde paire de rails de guidage (102B) et l'autre partie d'extrémité (110B) pouvant se déplacer linéairement le long du rail de guidage supérieur (103B) de la seconde paire de rails de guidage (102B) ; et dans lequel
les premier et second ensembles de pieds (101A, 101B) sont reliés entre eux par au moins une barre transversale (112), ladite au moins une barre transversale (112) s'étendant perpendiculairement aux extensions longitudinales des rails de guidage (103A, 103B, 104A, 104B) dans les première et seconde paires de rails de guidage (102A, 102B).

3. Agencement de sécurité selon la revendication 1 ou 2, dans lequel l'élément de butée (202) comprend une pluralité de surfaces d'impact (204) parallèles, chaque surface d'impact (204) présentant une extension de surface orthogonale à une extension longitudinale des rails de guidage supérieur et inférieur (103A, 104A) de la première paire de rails de guidage (102A).

4. Agencement de sécurité selon l'une des revendications précédentes, dans lequel l'élément de butée (202) comprend une pluralité de surfaces d'impact (204) parallèles, et dans lequel les surfaces d'impact (204) sont uniformément réparties le long d'une extension longitudinale de l'élément de butée (202) de sorte que le piston (201), lorsqu'il se déplace vers sa position déployée, est amené à venir en butée sur une surface d'impact (204), que la structure de siège (100) réglable en hauteur soit réglée à une hauteur extrême supérieure ou inférieure.

5. Agencement de sécurité selon l'une des revendications précédentes, dans lequel l'élément de butée (202) comprend au moins 3 surfaces d'impact (204), et plus préférablement au moins 5 surfaces d'impact (204).

6. Agencement de sécurité selon l'une des revendications précédentes, dans lequel le piston (201) est conçu pour être actionné par une pression de gaz générée par un générateur de gaz.

7. Agencement de sécurité selon la revendication 1, dans lequel l'actionneur de siège (200) est dimensionné pour appliquer une force d'impact aux parties d'extrémité (107A, 107B, 110A, 110B) linéairement mobiles des pieds (105A, 105B, 108A, 108B), laquelle force d'impact présente une composante de force verticale qui dépasse une composante de force verticale appliquée par tout agencement de levage de siège (115) intégré dans la structure de siège (100).

8. Agencement de sécurité selon l'une quelconque des revendications précédentes, dans lequel l'élément de butée (202) est monté de manière fixe sur une structure (203) agencée sensiblement à l'horizontale, ladite structure étant fixée en tenant compte de la première paire de rails de guidage (102A).

9. Agencement de sécurité selon l'une quelconque des revendications précédentes, dans lequel l'actionneur de siège (200) est supporté de manière fixe par une barre transversale (112) s'étendant entre les parties d'extrémité (107A, 107B, 110A, 110B) linéairement mobiles des premier et second ensembles de pieds (101A, 101B) ; ou à partir de l'une des parties d'extrémité (107A, 107B, 110A, 110B) mobiles linéairement du premier ensemble de pieds (101A).

10. Agencement de sécurité selon la revendication 9, dans lequel l'actionneur de siège (200) est supporté de manière fixe à mi-chemin sur toute la longueur de la barre transversale (112) s'étendant entre les parties d'extrémité linéairement mobiles des premier et second ensembles de pieds (101A, 101B) ; ou au niveau d'une extrémité libre d'une barre transversale s'étendant à partir de l'une des parties d'extrémité mobiles du premier ensemble de pieds.

11. Agencement de sécurité selon l'une des revendications 1 à 7, dans lequel l'élément de butée (202) est monté de manière fixe sur une structure disposée sensiblement verticalement, ladite structure disposée sensiblement verticalement étant fixée en tenant compte de la première paire de rails de guidage (102A).

12. Agencement de sécurité selon la revendication 11, dans lequel la structure de siège (100) comprend en outre un support de siège (113) présentant une surface supérieure et une surface inférieure ; dans lequel le rail de guidage supérieur (103A, 103B) de la paire respective de rails de guidage (102A, 102B) est supporté par la surface inférieure du support de siège (113), et dans lequel l'actionneur de siège (200) est supporté de manière fixe par la surface inférieure du support de siège.

13. Siège de véhicule dans un camion, un poids lourd ou un bus, **caractérisé en ce qu'**il est équipé d'un agencement de sécurité selon l'une des revendications 1 à 12.
